# EUROPEAN PATENT SPECIFICATION

(11) **EP 3 067 548 B1**
(45) Date of publication and mention of the grant of the patent: **12.05.2021**
(21) Application number: 16158661.5
(22) Date of filing: 04.03.2016
(51) Int. Cl.: F02M 35/022, F02B 63/02

(54) **POWER WORKING MACHINE**
ANGETRIEBENE ARBEITSMASCHINE
MACHINE DE TRAVAIL DE PUISSANCE

(30) Priority: 12.03.2015 JP 2015049437
(43) Date of publication of application: 14.09.2016
(73) Proprietor: Yamabiko Corporation, Ohme-shi, Tokyo 198-8760 (JP)
(72) Inventor: KAWAMURA, Kunimune, Ohme-shi, Tokyo 198-8760 (JP); UMETANI, Kazuhiro, Ohme-shi, Tokyo 198-8760 (JP); NAKAGANNA, Hiroshi, Ohme-shi, Tokyo 198-8760 (JP); KOBAYASHI, Buhei, Ohme-shi, Tokyo 198-8760 (JP)
(74) Representative: Schrell, Andreas

(56) References cited:
- WO-A1-2011/068446
- DE-A1- 10 128 790
- DE-U1-202014 008 438
- US-B1- 6 295 953

## Description

### CLAIM OF PRIORITY

The present application claims priority from Japanese patent application JP 2015-049437 filed on March 12, 2015.

### BACKGROUND

### Technical Field

The present invention relates to a power working machine, and in particular, to a portable power working machine, such as a chain saw, an engine cutter, and a hedge trimmer, that is designed to prevent as much as possible an air cleaner attached to an air intake system of an internal combustion engine mounted on the power working machine as a driving power source for driving working components from being clogged with dust.

### Background Art

A portable power working machine, such as a chain saw, is typically constructed such that a small air-cooled internal combustion engine acting as a driving power source for driving working components, such as a saw chain, is mounted in a main body housing, that a cooling fan driven by the internal combustion engine is disposed on one side of the main body housing, and that a carburetor chamber housing therein an air cleaner and a carburetor is disposed above the rear side of the internal combustion engine (for example, see Patent Document 1).

In the operation of the portable power working machine as described above, dust that includes sawdust, powder of cut material and sand-like dust is inevitably generated. When dust of those kinds is allowed to be sucked together with air into the air intake system of the internal combustion engine and to collect on the filter element of the air cleaner, clogging of the filter occurs, thus giving rise to abnormal conditions and deterioration of the performance of the internal combustion engine due to insufficiency in the intake air amount. Accordingly, it is required in the operation of the portable power working machine to frequently clean the air cleaner and the like, which is a task that is quite troublesome for the operator.

To address the foregoing disadvantages, in the operation of the power working machine as described above, various methods are conventionally employed to reduce clogging of an air cleaner attached to an air intake system of a small air-cooled internal combustion engine mounted as a driving power source for working components. In particular, Patent Documents 2 and 3 disclose conventional techniques for suppressing mixing of dust into air sucked into an air intake system.

The portable working machine described in Patent Document 2 includes a first volute provided around a fan rotatably driven by an engine, a second volute provided inside or outside the first volute, a first fin provided to correspond to the first volute on one of the front and back surfaces of the fan, and a second fin provided to correspond to the second volute on the other surface. The first volute is provided so as to be capable of ejecting air sucked by the first fin as cooling air for cooling the engine, a region close to the inner periphery of the second volute communicates with an air intake passage of the engine, and a region close to the outer periphery is opened around the engine.

The engine working machine described in Patent Document 3 includes a volute unit for regulating an air flow produced by the rotation of a cooling fan, and the volute unit has a round unit and a straight unit. An air intake port, which is adapted to split the regulated cooling air into air for air intake of the engine, is formed in a region in the straight unit that is a region on the inner side than the center line of the straight unit in the horizontal-width direction, and the air intake port opens toward the downstream side of the cooling air flowing down through the region.

### RELATED ART DOCUMENTS

### Patent Documents

Patent Document 1: JP 2000-345841 A
Patent Document 2: JP 2007-046586 A
Patent Document 3: JP 2007-113443 A

### SUMMARY

However, in the portable working machine described in Patent Document 2, air that has flowed through the region close to the inner periphery of the second volute is sucked into the air intake passage of the engine. Therefore, when a centrifugal separation function is not sufficient in the second volute, the centrifugal separation of the air is not sufficiently performed around the cooling fan, so that dust may be mixed in the air sucked into the air intake passage. Moreover, depending upon the position and size of the air intake port of the air intake passage of the engine communicating with the second volute, the airflow amount of the air (cooling air) for cooling the engine may decrease.

Meanwhile, in the engine working machine described in Patent Document 3, the air intake port for splitting air for air intake of the engine is formed in a region on the inner side than the center line of the straight unit in the horizontal-width direction of the volute unit and opens toward the downstream side of the cooling air flowing down through the region. Therefore, as with the portable working machine described in Patent Document 2, when the centrifugal separation function is not sufficient in the volute unit, dust may be mixed into air sucked into the air intake system of the engine, the airflow amount of the cooling air may decrease, and suction efficiency for the air intake system of the engine may decrease, thereby possibly reducing an engine output and deteriorating the centrifugal separation function in an air cleaner chamber disposed downstream therefrom Other similar power working machines are shown in documents: US 6,295,953 and DE 20 2014 008 438U1.

The present invention has been made to solve the aforementioned problems. For example, it is an object of the present invention to provide a portable power working machine that is designed to suppress mixing of dust into air sucked into an air intake system of an air-cooled internal combustion engine mounted as a driving power source for working units, reliably reduce clogging of an air cleaner provided to the air intake system of the internal combustion engine, and eliminate the necessity of frequently cleaning the air cleaner.

As a result of intensive researches such as substantive tests and numerical analyses, the inventors have found that the aforementioned problems can be solved by devising, with a simple configuration, the relative positions or shapes of a discharge port of a straightening passage formed around a cooling fan and an air intake port of an air intake passage for sucking air into the air intake system of the internal combustion engine.

That is, a power working machine according to the present invention includes an air-cooled internal combustion engine mounted in a main body housing, a cooling fan disposed to be driven by the internal combustion engine on one side of the main body housing, a straightening passage formed around the cooling fan to straighten a flow of air sucked into the main body housing by the cooling fan, and an air intake passage adapted to suck part of air that has flowed through the straightening passage and has been released from a discharge port positioned at a downstream end of the straightening passage into an air intake system of the internal combustion engine. An air intake port of the air intake passage is arranged on an opposite side of the internal combustion engine with respect to the straightening passage, and, of the air released from the discharge port of the straightening passage, at least part of air released toward the opposite side of the internal combustion engine with respect to the straightening passage is taken into the air intake passage via the air intake port.

In a preferred embodiment, the air intake port is provided on a lateral side of the internal combustion engine.

In another preferred embodiment, the air intake port is provided so as to be opposite the discharge port of the straightening passage as viewed from side.

According to the invention, the air intake port is provided so as to be inclined to the discharge port of the straightening passage as viewed from side.

In another preferred embodiment, the air intake port is provided adjacent to the cooling fan as viewed from side.

In yet another preferred embodiment, the discharge port of the straightening passage opens in a diagonally forward direction, and the air intake port of the air intake passage opens downward above the cooling fan and communicates with an air cleaner chamber disposed above and behind the cooling fan.

In another preferred embodiment, the air cleaner chamber stores a cylindrical air cleaner and has a swirling flow path defined around the air cleaner, air that has flowed through the air intake passage is introduced into the swirling flow path via an inlet port that opens into the swirling flow path on a lateral side of the air cleaner, part of the air swirling in the swirling flow path is again sucked into and circulated through the cooling fan via an exhaust port that opens into the swirling flow path in a direction different from the inlet port on the lateral side of the air cleaner, and other part of the air swirling in the swirling flow path is sucked into the internal combustion engine via the cleaner and a carburetor.

In yet another preferred embodiment, the exhaust port is arranged on a lower side than the inlet port or is provided adjacent to a lower partition wall that forms the air cleaner chamber.

According to a power working machine of the present invention, when the power working machine is operated, air (cooling air) containing dust sucked from one side of the main body housing by the cooling fan flows through the straightening passage formed around the cooling fan, is accelerated, pressurized, and released from the discharge port of the straightening passage, and then part of the air cools the internal combustion engine mounted in the main body housing and is discharged to the outside from an exhaust outlet formed in the main body housing, while part of the air is sucked into the air intake system (carburetor chamber housing therein the air cleaner and the carburetor chamber) of the internal combustion engine through the air intake passage. In this case, most of dust in the air flowing through the straightening passage around the cooling fan is forced toward the outer peripheral side (far from the cooling fan) of the straightening passage due to the effect of inertia (that is, centrifugal separation) thereof, thus preventing most of the dust from reaching the inner peripheral side (near the cooling fan) of the straightening passage. Moreover, dust in the air released from the discharge port of the straightening passage is hardly diffused in the periphery from the discharge port due to the effect of inertia, and most of the dust is carried on air and is discharged to the internal combustion engine side at a relatively low pressure (that is, the main flow side of the cooling air), thus preventing most of the dust from reaching the opposite side of the internal combustion engine side. According to the invention, the air intake port of the air intake passage is arranged on the opposite side of the internal combustion engine with respect to the straightening passage. Thus, it is possible to suppress a decrease in the amount of airflow to the internal combustion engine side (the main flow side), ensure the cooling performance of the internal combustion engine, and, even if a centrifugal separation function in the straightening passage is not sufficient, for example, suppress mixing of dust into air sucked into the air intake system of the internal combustion engine (the air intake passage), reliably prevent the air cleaner provided to the air intake system of the internal combustion engine from being clogged with dust, and thus relieving the task of frequently cleaning the air cleaner, thereby enhancing work efficiency. Moreover, there may be cases where water droplets are contained in the air sucked by the cooling fan due to rain, snow, and the like, but as with the case of dust, most of the water droplets in the air are also prevented from reaching the opposite side of the internal combustion engine side. Thus, it is possible to suppress mixing of water droplets into the air sucked into the air intake system of the internal combustion engine. This can also reliably prevent the air cleaner from being clogged and extend the lifetime (service life) of the air cleaner.

Since the air intake port is provided on a lateral side of the internal combustion engine, dust and water droplets in the air released from the discharge port of the straightening passage are further hardly mixed into the air intake passage, thereby further reliably preventing the air cleaner from being clogged.

Since the air intake port is provided so as to be opposite the discharge port of the straightening passage as viewed from side, air released from the discharge port of the straightening passage toward the opposite side of the internal combustion engine with respect to the straightening passage is easily sucked into the air intake passage. Thus, it is possible to allow the air to be sucked into the air intake passage in the pressurized state, ensure a sufficient intake amount of air for the air intake system of the internal combustion engine, suppress an output decrease in the internal combustion engine, and suppress deterioration of the centrifugal separation function in the air cleaner chamber disposed on the downstream therefrom.

Since the air intake port is provided so as to be inclined to the discharge port of the straightening passage as viewed from side, generation of swirling current near the air intake port is suppressed. This can also allow air, which has been released from the discharge port of the straightening passage toward the opposite side of the internal combustion engine with respect to the straightening passage, to be easily sucked into the air intake passage, and for example, allow the air to be sucked into the air intake passage in the pressurized state, ensure a sufficient intake amount of air for the air intake system of the internal combustion engine, suppress an output decrease in the internal combustion engine, and suppress deterioration of the centrifugal separation function in the air cleaner chamber disposed on the downstream therefrom.

Since the air intake port is provided adjacent to the cooling fan as viewed from side, air, which has flowed through the inner peripheral side of the straightening passage of the air released from the discharge port of the straightening passage toward the opposite side of the internal combustion engine with respect to the straightening passage (air reduced in dust and water droplets by the centrifugal separation function in the straightening passage), can be sucked into the air intake passage. Thus, it is possible to further suppress mixing of dust and water droplets into the air intake passage and further effectively reduce clogging of the air cleaner.

Since the discharge port of the straightening passage opens in a diagonally forward direction, and the air intake port of the air intake passage opens downward above the cooling fan and communicates with the air cleaner chamber disposed above and behind the cooling fan, it is possible to smoothly take air, which has flowed through the straightening passage and has been released from the discharge port, into the air intake passage via the air intake port, and flow the air smoothly into the air cleaner chamber provided to the air intake system of the internal combustion engine via the air intake passage.

The air cleaner chamber stores a cylindrical air cleaner and has a swirling flow path defined around the air cleaner, air that has flowed through the air intake passage is introduced into the swirling flow path via an inlet port that opens into the swirling flow path on the lateral side of the air cleaner, part of the air swirling in the swirling flow path is again sucked into and circulated through the cooling fan via an exhaust port that opens into the swirling flow path in a direction different from the inlet port on the lateral side of the air cleaner, and other part of the air swirling in the swirling flow path is sucked into the internal combustion engine via the air cleaner and a carburetor, so that air that has flowed through the air intake passage can be smoothly swirled in the swirling flow path in the air cleaner chamber. Therefore, since a flow rate reduction in the swirling flow path in the air cleaner chamber can be suppressed and the centrifugal separation function in the swirling flow path can be ensured, even if dust remains in the air that has flowed through the air intake passage and has been introduced into the swirling flow path from the inlet port, most of the dust in the air is forced toward the outer peripheral side of the swirling flow path due to the effect of inertia and is again sucked into the cooling fan via the exhaust port, thus preventing most of the dust from reaching the inner peripheral side of the swirling flow path on the air cleaner side. Accordingly, it is possible to prevent as much as possible the air cleaner from being clogged with dust and relieve the task of frequently cleaning the air cleaner, thereby further enhancing work efficiency. Moreover, as with the case of dust, water droplets that are contained in the air due to rain, snow, and the like are also forced toward the outer peripheral side of the swirling flow path and thus are hardly attached to the air cleaner on the inner peripheral side of the swirling flow path. This can also prevent as much as possible the air cleaner from being clogged and extend the lifetime (service life) of the air cleaner.

Moreover, since the exhaust port is arranged on the lower side than the inlet port or is provided adjacent to the lower partition wall that forms the air cleaner chamber, dust and water droplets in the air, which has been introduced into the swirling flow path from the inlet port and has swirled in the swirling flow path while the power working machine is being used, are again sucked into the cooling fan via the exhaust port, which is arranged on the lower side than the inlet port or is provided adjacent to the lower partition wall that forms the air cleaner chamber, due to the effect of gravity. This can also prevent as much as possible the air cleaner from being clogged.

### BRIEF DESCRIPTION OF THE DRAWINGS

FIGS. 1A and 1B are views showing the overall configuration of an embodiment of a chain saw as a power working machine according to the present invention; FIG. 1A is an overall perspective view seen obliquely from the rear, and FIG. 1B is a left side view.
FIG. 2 is a cross-sectional view taken along line A-A of FIG. 1B.
FIG. 3 is an overall perspective view showing a state in which a recoil starter case and a cylinder cover of the chain saw shown in FIGS. 1A and 1B are detached, seen obliquely from the rear.
FIG. 4 is an essential-part enlarged left side view showing enlarged essential parts in a state in which a fan cover is further detached from the chain saw shown in FIG. 3.
FIG. 5 is an essential-part enlarged plan view showing enlarged essential parts of the chain saw shown in FIG. 3.
FIG. 6 is a schematic view schematically showing the positional relationship between an air intake port and a straightening passage of the chain saw shown in FIGS. 1A and 1B.
FIGS. 7A and 7B are views showing a state in which the recoil starter case and the fan cover of the chain saw shown in FIGS. 1A and 1B are assembled; FIG. 7A is a rear side view (right side view), and FIG. 7B is a perspective view seen from the right rear and below.
FIGS. 8A and 8B are views showing the cylinder cover of the chain saw shown in FIGS. 1A and 1B; FIG. 8A is a right side view, and FIG. 8B is a view seen in the direction of the arrow B of FIG. 8A.
FIG. 9 is an overall perspective view showing an embodiment of an engine cutter as the power working machine according to the present invention.
FIGS. 10A and 10B are essential-part enlarged left side views showing enlarged essential parts of the engine cutter shown in FIG. 9; FIG. 10A is a partially cut-away left side view showing a state in which the recoil starter case is detached, and FIG. 10B is a left side view showing a state in which the fan cover is further detached from FIG. 10A.
FIG. 11 is a partially cut-away front view of the engine cutter shown in FIG. 10A.

### DETAILED DESCRIPTION OF THE EMBODIMENT(S)

Hereafter, embodiments of a power working machine according to the present invention will be described referring to the drawings. In the present specification, for ease of description, description that represents a direction, such as above and below, left and right, and front and rear, is based on a direction arrow indication shown in each drawing as a reference and is not intended to indicate a direction and a position in the actual use state.

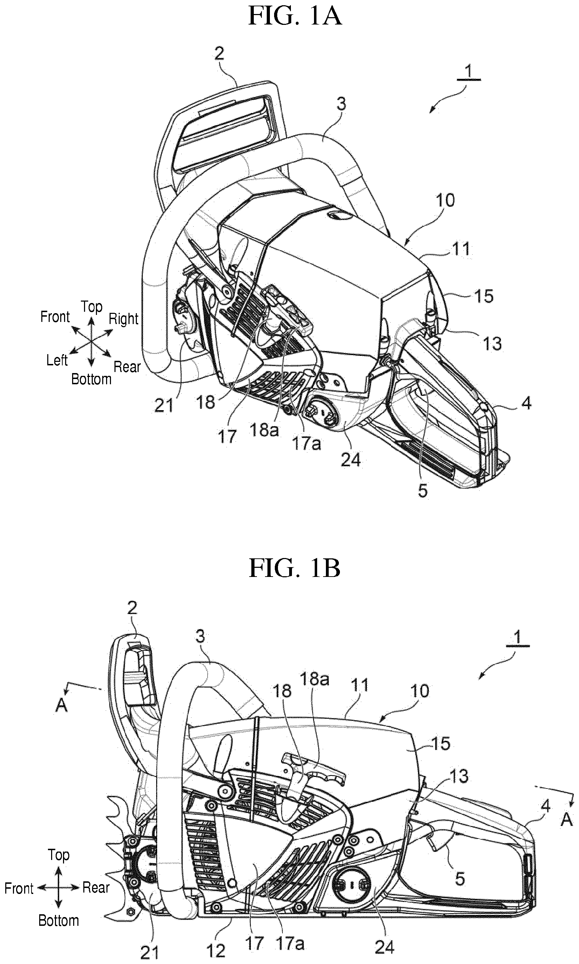

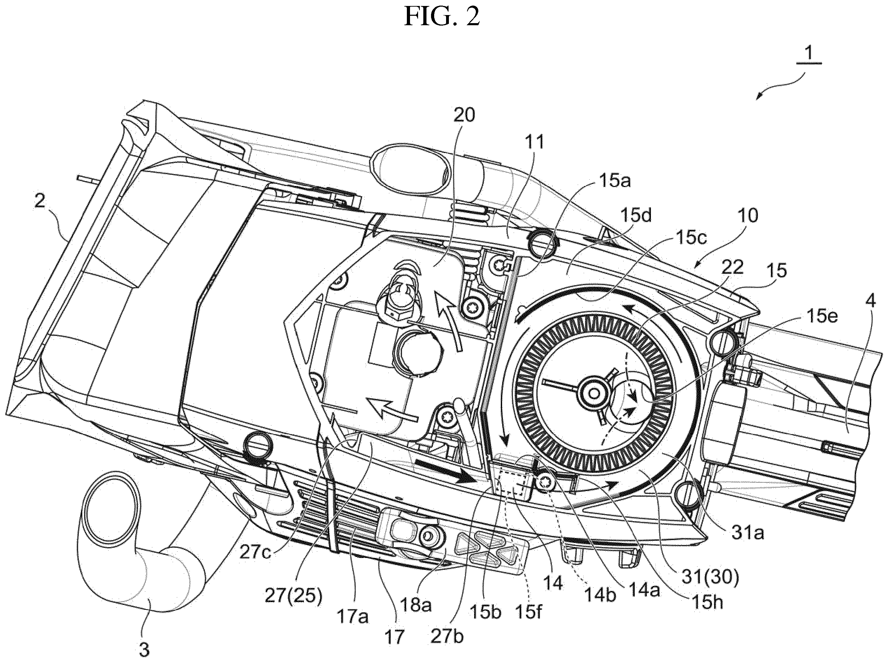

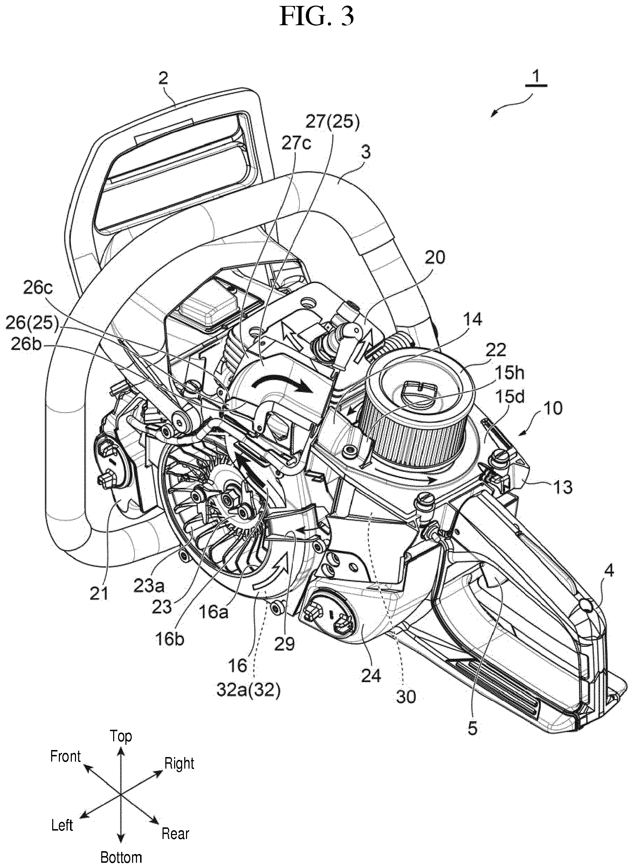

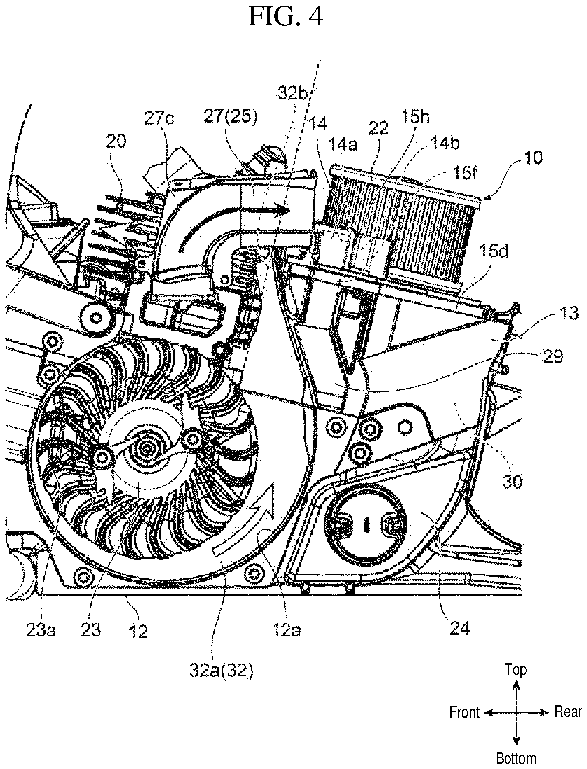

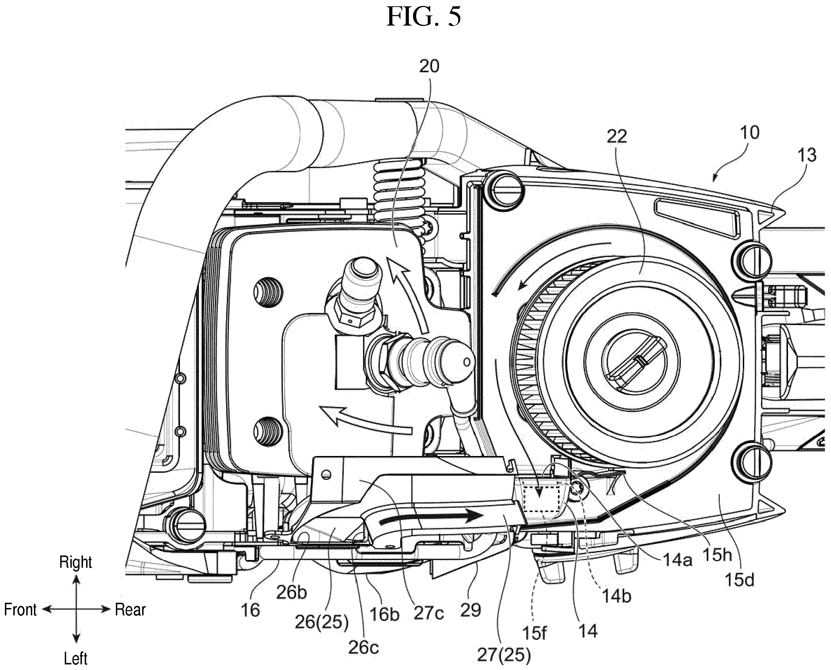

FIGS. 1A and 1B are an overall perspective view and a left side view, respectively, in which an embodiment of a chain saw as a power working machine according to the present invention is seen obliquely from the rear, and FIG. 2 is a cross-sectional view taken along line A-A of FIG. 1B. Moreover, FIGS. 3 and 5 are an overall perspective view and an essential-part enlarged plan view, respectively, showing a state in which a recoil starter case and a cylinder cover of the chain saw shown in FIGS. 1A and 1B are detached, seen obliquely from the rear. FIG. 4 is an essential-part enlarged left side view showing essential parts in a state in which a fan cover is further detached from the chain saw shown in FIG. 3.

Note that FIGS. 1 to 3 omit a saw chain set including a guide bar and a saw chain. Moreover, to help understand the configuration of an air intake passage communicating with an air cleaner chamber, FIGS. 3 to 5 also show a second passage member that forms a second passage of the air intake passage provided to a cylinder cover.

A chain saw 1 in the shown embodiment generally includes a chain saw main body 10 in which a small air-cooled two-stroke gasoline engine (hereinafter referred to as an internal combustion engine) 20 (see FIGS. 2 to 5) as a driving power source for working components is mounted in a main body housing 11 made of a synthetic resin such that the cylinder of the engine is vertically oriented. A saw chain set (not shown), which is composed of a guide bar and a saw chain (chain with a cutter) slidably trained along the guide bar, is mounted as a working component on the front right side of the chain saw main body 10. Note that in the specification, a side on which a saw chain set exists is referred to as "a front side," an opposite side thereof as "a rear side," an upper end side (ignition plug side) of the internal combustion engine 20 as "an upper side," and a lower end side thereof as "a lower side."

Moreover, a hand guard 2 that also serves as a brake lever is disposed on the front upper side of the chain saw main body 10, and a front handle 3 is disposed behind the hand guard 2 so as to transverse the chain saw main body 10. Moreover, behind the chain saw main body 10, a rear handle 4 extending rearwardly is protrusively provided, and the rear handle 4 is provided with a throttle trigger 5. Note that the operation methods and functions of the hand guard 2, the throttle trigger 5 provided on the rear handle 4, and the like are well-known, and therefore, detailed descriptions will be omitted.

The chain saw main body 10 that is the main body of the chain saw 1 mainly includes the internal combustion engine 20, a diaphragm type carburetor (not shown) and an air cleaner 22 attached to an air intake system of the internal combustion engine 20, a cooling fan 23 driven by the internal combustion engine 20, and a fuel tank 24 for storing fuel supplied to the internal combustion engine 20. The cooling fan 23 driven by the internal combustion engine 20 uses part of air sucked into the main body housing 11 to cool the internal combustion engine 20 and sucks part of the air into the internal combustion engine 20.

As clearly shown in FIGS. 2 to 5, the internal combustion engine 20 is mounted so that the cylinder is vertically oriented around the center of the main body housing 11 (specifically, in a posture where the cylinder is slightly inclined rearwardly); the air cleaner 22 and the carburetor are vertically disposed adjacent to each other on the upper side of the rear portion of the main body housing 11; the cooling fan 23 is disposed on the left side of the main body housing 11 and on a lateral side of the internal combustion engine 20; and the fuel tank 24 is attached to the lower rear portion of the main body housing 11. Note that an oil tank 21 for storing oil supplied to the saw chain is attached on the front lower side of the main body housing 11.

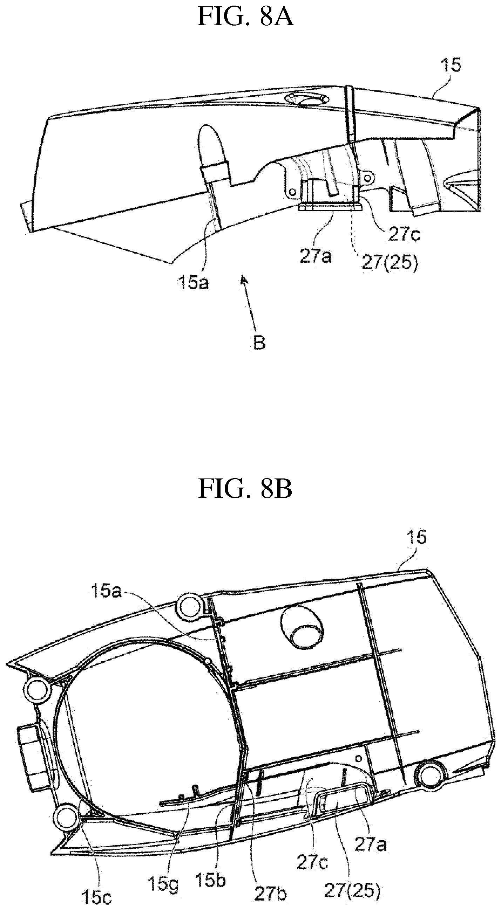

In more detail, the internal combustion engine 20 is stored in a box-shaped main body case 12 (see FIG. 4) so as to allow the upper end portion of the internal combustion engine 20 (specifically, the top side of the cylinder, the ignition plug, and the like) to be protruded, and a rear end opening of the main body case 12 is covered by a carburetor case 13, and further, an upper end opening of the main body case 12 and an upper end opening of on the carburetor case 13 are covered by a cylinder cover 15 that opens downward. The cylinder cover 15 includes integrally formed therewith a front partition wall 15a having an inlet port 15b horizontally extending around the center (see FIG. 8B). The front partition wall 15a isolates the main body case 12 side (front side) and the carburetor case 13 side (rear side) of the cylinder cover 15, and the front partition wall 15a, the rear half portion of the cylinder cover 15, and the carburetor case 13 define a carburetor chamber 30 for storing the air cleaner 22 and the carburetor. Meanwhile, a lower partition wall 15d having an air intake port 15e (see FIG.2) is attached between the cylinder cover 15 and the carburetor case 13, and the lower partition wall 15d, the front partition wall 15a, and the rear half portion of the cylinder cover 15 hermetically define an air cleaner chamber 31 for storing the air cleaner 22 above the carburetor chamber 30. The air cleaner 22 stored in the air cleaner chamber 31 is formed in a substantially cylindrical shape and is fixedly mounted on the lower partition wall 15d so as to cover the air intake port 15e provided slightly to the rear side of the center of the lower partition wall 15d in the horizontal direction in the air cleaner chamber 31. Moreover, the carburetor is disposed below the lower partition wall 15d in the air cleaner chamber 31 (that is, the bottom of the carburetor chamber 30) so that the air intake port 15e of the lower partition wall 15d communicates with a combustion chamber in the cylinder of the internal combustion engine 20.

Note that the lower partition wall 15d is disposed substantially perpendicularly to the center axis of the cylinder of the internal combustion engine 20, and the air cleaner 22 mounted on the lower partition wall 15d is arranged so that the center axis is substantially parallel with the center axis of the cylinder of the internal combustion engine 20.

The cooling fan 23 is attached in a concave portion 12a provided on the left side of the main body case 12 (see FIG. 4) so that the fan axis is horizontally directed.

In addition, a fan cover 16 having an inlet port 16a is attached on the left side of the main body case 12 so as to cover the outer edges of radially arranged impellers 23a of the cooling fan 23 as well as a space formed by the outer peripheral surfaces of the impellers 23a and the concave portion 12a. Therefore, a volute 32 having a spiral-shaped straightening passage 32a for regulating a flow of air sucked into the main body housing 11 by the cooling fan 23 is defined on the inner side of the fan cover 16 and around the cooling fan 23. Note that the passage cross-sectional area of the straightening passage 32a, which has a substantially rectangular cross section for forming the volute 32, increases gradually from the upstream side to the downstream side, and a discharge port 32b positioned at a downstream end of the straightening passage 32a is provided such that it faces forward and slightly upward around the rear end of the internal combustion engine 20.

Moreover, a recoil starter case 17 having an air intake slit 17a formed therein is attached to the outer surface of the fan cover 16, and the recoil starter case 17 has provided thereon an upwardly protruding starter grip 18a of a recoil starter 18 for starting the internal combustion engine 20.

Therefore, air sucked into the main body housing 11 by the cooling fan 23 driven by the internal combustion engine 20 is flowed through the volute 32 formed around the cooling fan 23 and is accelerated and pressurized, so that most of the air cools the internal combustion engine 20 mounted in the main body housing 11 and is then discharged to the outside from an exhaust outlet (not shown) formed in the main body housing 11.

Note that in the specification, the straightening passage 32a represents a region formed by the concave portion 12a provided on the left side of the main body case 12, the outer peripheral surface of the cooling fan 23, and the fan cover 16, while the discharge port 32b of the straightening passage 32a represents an opening formed at an end of the concave portion 12a (in the present embodiment, an opening that faces forward and slightly upward) (see, in particular, FIG. 4). Meanwhile, the volute 32 represents a region including the straightening passage 32a mentioned above and a space between the straightening passage 32a and an air intake passage 25 mentioned below.

Note that the main body housing 11 of the chain saw main body 10 mainly includes the main body case 12, the carburetor case 13, the cylinder cover 15, the fan cover 16, and the recoil starter case 17.

Next, description will be made in detail of a configuration in which part of air that has been sucked into the main body housing 11 by the cooling fan 23 driven by the internal combustion engine 20 and has flowed through the volute 32 is sucked into the internal combustion engine 20. In addition, in the present embodiment, description will be also made of a configuration in which, in order to ensure a centrifugal separation function in the air cleaner chamber 31 provided to the air intake system of the internal combustion engine 20, part of air that has flowed through the volute 32 and has been sucked into the air intake system of the internal combustion engine 20 is again sucked into and circulated through the cooling fan 23.

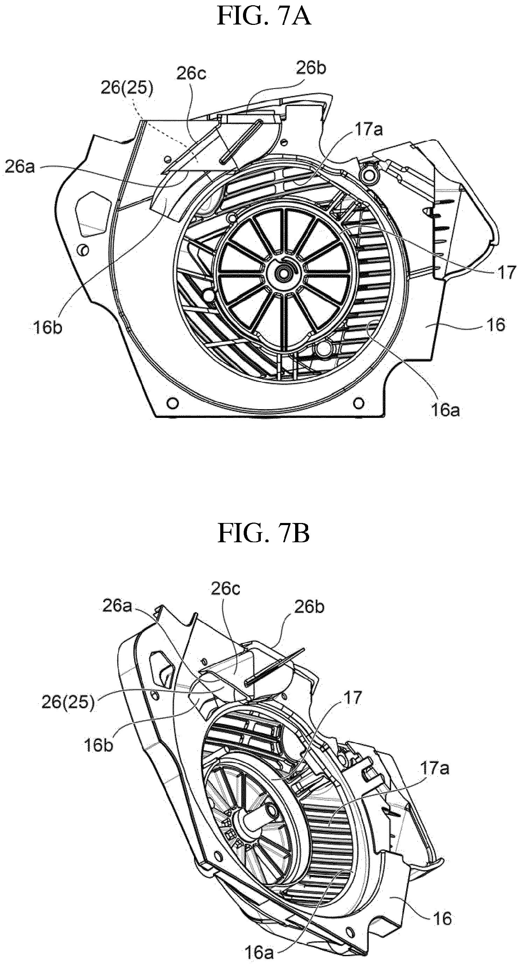

As clearly shown in FIGS. 3 to 5, the periphery of the inlet port 16a in the fan cover 16 slightly protrudes outward (toward the left side) across the top from a slightly upstream side of the discharge port 32b of the straightening passage 32a in the volute 32 (particularly, a portion on the upstream side of the discharge port 32b and the inner peripheral side of the straightening passage 32a). In addition, as clearly shown in FIGS. 7A and 7B, a first passage member 26c for forming a first passage 26 formed of a flat cylindrical body having a substantially horizontal first inlet port (upstream side opening; air intake port) 26a that faces downward and a substantially horizontal first outlet port (downstream side opening) 26b that faces upward is attached to the inner surface of the upper half of a bulging portion 16b of the fan cover 16. Note that the first passage 26 forms the lower portion of the air intake passage 25 mentioned below.

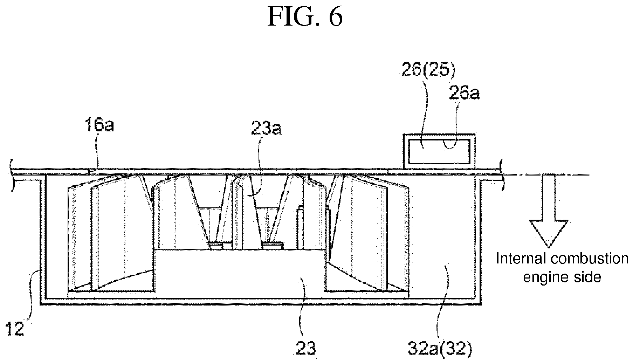

Herein, the air intake port (first inlet port) 26a of the first passage 26 defined between the inner surface of the upper half of the bulging portion 16b and the first passage member 26c is arranged to extend forward from a lateral portion of the discharge port 32b of the straightening passage 32a and arranged at a position offset outward from the straightening passage 32a (that is, the opposite side of the internal combustion engine 20 with respect to the straightening passage 32a) as viewed from side (see FIG. 6). Moreover, the air intake port 26a is provided so as to be opposite the discharge port 32b of the straightening passage 32a (that is, toward the upstream side of the flow direction of air released from the discharge port 32b by flowing through the straightening passage 32a) and so as to be inclined to the discharge port 32b as viewed from side. More specifically, the discharge port 32b opens forward and slightly upward around the rear end of the internal combustion engine 20, and the air intake port 26a opens downward on the lateral side of the internal combustion engine 20 and above the cooling fan 23 (see FIGS. 3 and 4).

Meanwhile, as clearly shown in FIGS. 8A and 8B, the inner surface of the left side of the front half of the cylinder cover 15 (that is, a left portion above the internal combustion engine 20) has attached thereto a second passage member 27c including a groove for forming a second passage 27 formed of a flat cylindrical body having a second inlet port (upstream side opening) 27a that faces downward and is adapted to be fitted to the first outlet 26b of the first passage 26 and a second outlet port (downstream side opening) 27b that faces backward and communicates with the inlet port 15b formed in the left portion of the front partition wall 15a. Note that the second passage 27 forms the upper portion of the air intake passage 25 mentioned below.

The fan cover 16 and the cylinder cover 15 are attached to the main body case 12, and the first outlet 26b of the first passage 26 is hermetically fitted to the second inlet port 27a of the second passage 27, so that the first passage 26 communicates with the second passage 27, and the air intake passage 25 is formed to deliver, to the air cleaner chamber 31 provided to the air intake system of the internal combustion engine 20, part of air that has flowed through the straightening passage 32a formed around the cooling fan 23 and has been released from the discharge port 32b.

In addition, as clearly shown in FIG. 8B, the inner surface of the rear half portion of the cylinder cover 15 (a portion behind the front partition wall 15a) has integrally formed thereon an arc circumferential wall 15c so as to cover the periphery of the air cleaner 22 disposed in the air cleaner chamber 31. The cylinder cover 15 is attached above the lower partition wall 15d while the air cleaner 22 is fixedly mounted on the lower partition wall 15d, so that a swirling flow path 31a is defined between the air cleaner 22 and the arc circumferential wall 15c in which air, which has flowed through the air intake passage 25 and has been introduced backward to the air cleaner chamber 31 from the inlet port 15b of the front partition wall 15a, turns counter-clockwise around the air cleaner 22, in the direction of the rear side, the right side, and the front side from the left side of the air cleaner 22, as viewed in plan.

Note that a substantially planar first straightening guide 15g is integrally formed on the inner side of the circumferential wall 15c so as to be positioned between the circumferential wall 15c and the air cleaner 22. The straightening guide 15g extends from a portion on the inner side of the inlet port 15b in the front partition wall 15a to the vicinity on the lateral side of the center of the air cleaner 22, so that air introduced into the air cleaner chamber 31 from the inlet port 15b of the front partition wall 15a smoothly flows (is guided) to the swirling flow path 31a, and dust or water droplets contained in the air does not flow around to the air cleaner 22 side.

Further, as clearly shown in FIGS. 2 to 5, the left front portion of the lower partition wall 15d (around the inlet port 15b of the front partition wall 15a and substantially at the same position as the inlet port 15b with respect to the air cleaner 22 as viewed in plan) has formed therein an opening 15f and also has protrusively provided thereon a protruding portion 14 that protrudes upward from the lower partition wall 15d so as to cover the opening 15f. The protruding portion 14 has formed therein a rightward exhaust port 14a (that is oriented in a direction opposite the flow direction of air that has swirled in the swirling flow path 31a) and also has formed therein a communication passage 14b for allowing the opening 15f and the exhaust port 14a to communicate with other. Herein, the exhaust port 14a of the protruding portion 14 is provided adjacent to the lower partition wall 15d and is arranged on the lower side than the inlet port 15b, and an opening area thereof is larger than that of the air intake port (first inlet port) 26a of the air intake passage 25.

Note that in the lower partition wall 15d, a substantially planar second straightening guide 15h is also disposed in a standing position at substantially the same position as the first straightening guide 15g of the cylinder cover 15 described above. The second straightening guide 15h extends from the right rear side of the protruding portion 14 to the vicinity on the lateral side of the center of the air cleaner 22. Accordingly, as with the first straightening guide 15g, air introduced into the air cleaner chamber 31 from the inlet port 15b of the front partition wall 15a smoothly flows to the swirling flow path 31a, and dust or water droplets contained in the air does not flow around to the air cleaner 22 side.

Provided continuously below the lower partition wall 15d (i.e., in a region from the left side at the bottom of the carburetor chamber 30 to the outside of the fan cover 16) is a circulating passage 29 for causing part of air swirling around the swirling flow path 31a in the air cleaner chamber 31 to be sucked into and circulated through the cooling fan 23 again.

In the chain saw (power working machine) 1 configured as described above, when the operator operates the recoil starter 18 to start the internal combustion engine 20 in the operation, the cooling fan 23 is rotatably driven and sucks the outside air via the air intake slit 17a of the recoil starter case 17 and the inlet port 16a of the fan cover 16. Air containing dust sucked from the left side of the main body housing 11 by the cooling fan 23 is flowed through the straightening passage 32a formed around the cooling fan 23, and is accelerated and pressurized, and is then released (diffused) from the discharge port 32b, which faces forward and slightly upward, of the straightening passage 32a. Then, most of the air cools the internal combustion engine 20 mounted in the main body housing 11 and is discharged to the outside from an exhaust outlet formed in the main body housing 11 (see the hollow arrows in FIGS. 2 to 5), while part of the air is sucked into the air cleaner chamber 31 of the carburetor chamber 30 provided to the air intake system of the internal combustion engine 20 via the air intake passage 25 and the inlet port 15b provided above the cooling fan 23 (see the bold arrows in FIGS. 2 to 5). In this case, most of dust in the air flowing through the straightening passage 32a around the cooling fan 23 is forced toward the outer peripheral side (far from the cooling fan 23) of the straightening passage 32a due to the effect of inertia (that is, centrifugal separation) thereof, thus preventing most of the dust from reaching the inner peripheral side (near the cooling fan 23) of the straightening passage 32a. Moreover, dust in the air released from the discharge port 32b of the straightening passage 32a is hardly diffused in the periphery from the discharge port 32b due to the effect of inertia, and most of the dust is carried on air and is discharged to the internal combustion engine 20 side at a relatively low pressure (that is, the inner side than the straightening passage 32a and the main flow side of the cooling air), thus preventing most of the dust from reaching the opposite side (that is, the outside of the straightening passage 32a) of the internal combustion engine 20 side (see FIG. 6). Since the air intake port 26a of the air intake passage 25 is provided adjacent to the cooling fan 23 as viewed from side and is arranged at the opposite side of the internal combustion engine 20 with respect to the straightening passage 32a, the first passage 26 of the air intake passage 25 sucks air flowing through the inner peripheral side of the straightening passage 32a and released toward the outside of the straightening passage 32a from the discharge port 32b. Therefore, this can lead to suppressing a decrease in the amount of airflow to the internal combustion engine 20 side (the main flow side), ensuring the cooling performance of the internal combustion engine 20, and, even if a centrifugal separation function in the straightening passage 32a is not sufficient, for example, suppressing mixing of dust into the first passage 26 of the air intake passage 25, reliably preventing clogging of the air cleaner 22 provided to the air intake system of the internal combustion engine 20, and thus relieving the task of frequently cleaning the air cleaner 22, thereby enhancing work efficiency. Moreover, although there may be cases where water droplets are contained in the air sucked by the cooling fan 23 due to rain, snow, and the like, most of the water droplets in the air are also prevented from reaching the opposite side of the internal combustion engine 20 side (that is, the outside of the straightening passage 32a) as with the case of dust. Thus, it is possible to suppress mixing of water droplets into the air sucked into the air intake system of the internal combustion engine 20. This can also reliably prevent the air cleaner 22 from being clogged and extend the lifetime (service life) of the air cleaner 22.

Moreover, since the air intake port 26a is provided on the lateral side of the internal combustion engine 20, dust and water droplets in the air released from the discharge port 32b of the straightening passage 32a are further hardly mixed into the first passage 26 of the air intake passage 25, thereby further reliably preventing clogging of the air cleaner 22.

Moreover, since the air intake port 26a is provided so as to be opposite the discharge port 32b of the straightening passage 32a as viewed from side, it is possible to allow air released from the discharge port 32b of the straightening passage 32a toward the opposite side of the internal combustion engine 20 with respect to the straightening passage 32a to be easily sucked into the first passage 26 of the air intake passage 25. For example, it is possible to allow the air to be sucked into the air intake passage 25 in the pressurized state, ensure a sufficient intake amount of air for the air intake system of the internal combustion engine 20, suppress an output decrease in the internal combustion engine 20, and suppress deterioration of the centrifugal separation function in the air cleaner chamber 31 disposed on the downstream therefrom.

Moreover, the inventors have confirmed that when the air intake port 26a is provided so as to be inclined to the discharge port 32b of the straightening passage 32a as viewed from side, generation of swirling current around the air intake port 26a is suppressed, which in turn can allow air released from the discharge port 32b of the straightening passage 32a toward the opposite side of the internal combustion engine 20 with respect to the straightening passage 32a to be easily sucked into the first passage 26 of the air intake passage 25, and, for example, allow the air to be sucked into the air intake passage 25 in the pressurized state, ensure a sufficient intake amount of air for the air intake system of the internal combustion engine 20, suppress an output decrease in the internal combustion engine 20, and suppress deterioration of the centrifugal separation function in the air cleaner chamber 31 disposed on the downstream therefrom.

Note that in the present embodiment, as with the straightening passage 32a of the volute 32, the air intake passage 25 and the air cleaner chamber 31 communicating with the air intake passage 25 are also in the pressurized state.

In addition, since the discharge port 32b of the straightening passage 32a opens in a diagonally forward direction, and the air intake port 26a of the air intake passage 25 opens downward above the cooling fan 23 and communicates with the air cleaner chamber 31 disposed above and behind the cooling fan 23, it is possible to allow air, which has flowed through the straightening passage 32a and has been released from the discharge port 32b, to be smoothly taken into the air intake passage 25 via the air intake port 26a, and flow smoothly to the air cleaner chamber 31 provided to the air intake system of the internal combustion engine 20 via the air intake passage 25.

Moreover, after flowing through the air intake passage 25, the air is introduced into the air cleaner chamber 31 via the inlet port 15b formed in the left portion of the front partition wall 15a, and turns counter-clockwise in the swirling flow path 31a in the air cleaner chamber 31 as viewed in plan, and then, part of the air is discharged from the air cleaner chamber 31 by the rotation drive of the cooling fan 23 via the exhaust port 14a provided in the protruding portion 14, and is again sucked into and circulated through the cooling fan 23 via the circulating passage 29 (see the thin arrows in FIGS. 2 to 5), while the other part of the air is sucked into the internal combustion engine 20 via the air cleaner 22 on the inner peripheral side of the swirling flow path 31a, the air intake port 15e on the inner side of the air cleaner 22, and the carburetor during the suction process of the internal combustion engine 20 (see the single-dotted arrow in FIG. 2). In this case, the inlet port 15b opens backward into the swirling flow path 31a on the lateral side of the air cleaner 22, the exhaust port 14a opens into the swirling flow path 31a on the lateral side of the air cleaner 22 and in the rightward direction unlike the inlet port 15b, and the first straightening guide 15g and the second straightening guide 15h can smoothly swirl air (pressurized air), which has flowed through the air intake passage 25, in the swirling flow path 31a in the air cleaner chamber 31. Therefore, since a flow rate reduction in the swirling flow path 31a in the air cleaner chamber 31 can be suppressed and the centrifugal separation function in the swirling flow path 31a can thus be ensured, even if dust remains in the air that has flowed through the air intake passage 25 and has been introduced into the swirling flow path 31a from the inlet port 15b, most of the dust in the air is forced toward the outer peripheral side of the swirling flow path 31a due to the effect of inertia and is again sucked into the cooling fan 23 via the exhaust port 14a, thus preventing most of the dust from reaching the air cleaner 22 side on the inner peripheral side of the swirling flow path 31a. Therefore, it is possible to prevent as much as possible the air cleaner 22 from being clogged with dust and relieve the task of frequently cleaning the air cleaner 22, thereby further enhancing work efficiency. Moreover, as with the case of dust, water droplets that are contained in the air due to rain, snow, and the like are also forced toward the outer peripheral side of the swirling flow path 31a and thus are hardly attached to the air cleaner 22 on the inner peripheral side of the swirling flow path 31a. This can also prevent as much as possible the air cleaner 22 from being clogged and extend the lifetime (service life) of the air cleaner 22.

Moreover, since the exhaust port 14a of the protruding portion 14 is arranged on the lower side than the inlet port 15b of the front partition wall 15a and is provided adjacent to the lower partition wall 15d, when the chain saw 1 is used in a posture as shown in the drawing, dust and water droplets in the air, which has been introduced into the swirling flow path 31a from the inlet port 15b and has swirled in the swirling flow path 31a, are sucked into the cooling fan 23 again via the exhaust port 14a, which is arranged on the lower side than the inlet port 15b and is provided adjacent to the lower partition wall 15d, due to the effect of gravity. This can also prevent as much as possible the air cleaner 22 from being clogged.

Moreover, the exhaust port 14a is provided in the protruding portion 14 that protrudes upward from the lower partition wall 15d, and the protruding portion 14 has provided therein the communication passage 14b for allowing the exhaust port 14a and the opening 15f provided in the lower partition wall 15d to communicate with each other, so that part of air that has swirled in the swirling flow path 31a is sucked into the cooling fan 23 from the exhaust port 14a via the opening 15f provided in the lower partition wall 15d. Thus, the exhaust port 14a can be formed in the swirling flow path 31a in the air cleaner chamber 31, thereby reducing the size of the chain saw 1.

Moreover, since the exhaust port 14a is provided so as to be opposite the flow direction of air that has swirled in the swirling flow path 31a, air containing dust and water droplets, which has swirled in the swirling flow path 31a, can be smoothly discharged via the exhaust port 14a, and a flow rate reduction in the swirling flow path 31a in the air cleaner chamber 31 can be suppressed, and thus, the centrifugal separation function in the swirling flow path 31a can be ensured. This can also prevent as much as possible the air cleaner 22 from being clogged.

Moreover, since the inlet port 15b and the exhaust port 14a are provided at the same position with respect to the air cleaner 22, air that has flowed through the air intake passage 25 can be reliably swirled in the swirling flow path 31a. This can also prevent as much as possible the air cleaner 22 from being clogged, ensure the air intake efficiency of the internal combustion engine 20, and suppress an output decrease in the internal combustion engine 20.

Moreover, since the inlet port 15b is provided in the front partition wall 15a extending horizontally of the lateral side partition wall that forms the air cleaner chamber 31, air, which has flowed through the air intake passage 25 provided above the cooling fan 23, can be smoothly introduced into the swirling flow path 31a in the air cleaner chamber 31 provided behind the cooling fan 23 (or the internal combustion engine 20), and the size of the chain saw 1 in the horizontal direction can be reduced.

Moreover, since the arc circumferential wall 15c is provided around the air cleaner 22 and the swirling flow path 31a is defined between the air cleaner 22 and the circumferential wall 15c, the swirling flow path 31a can swirl air, which has flowed through the air intake passage 25, smoothly and reliably. This can also prevent as much as possible the air cleaner 22 from being clogged.

Note that the above embodiment has described an example in which the present invention is applied to a chain saw as a portable power working machine. However, it goes without saying that the present invention can be applied not only to a chain saw but also to other machines such as an engine cutter (cut-off saw), a hedge trimmer, a blower, and a brush cutter.

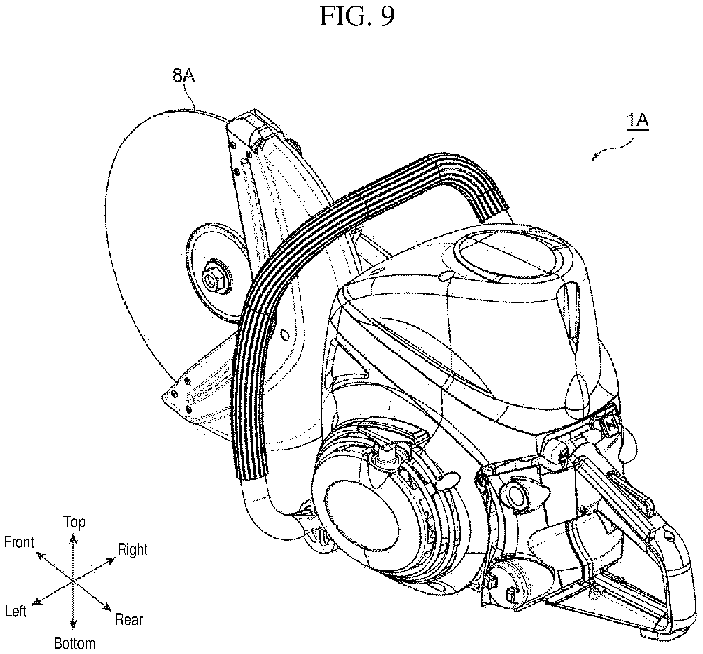

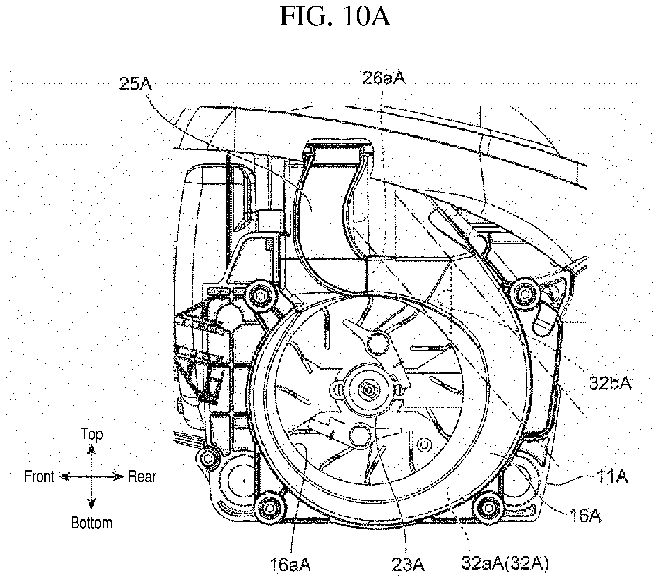

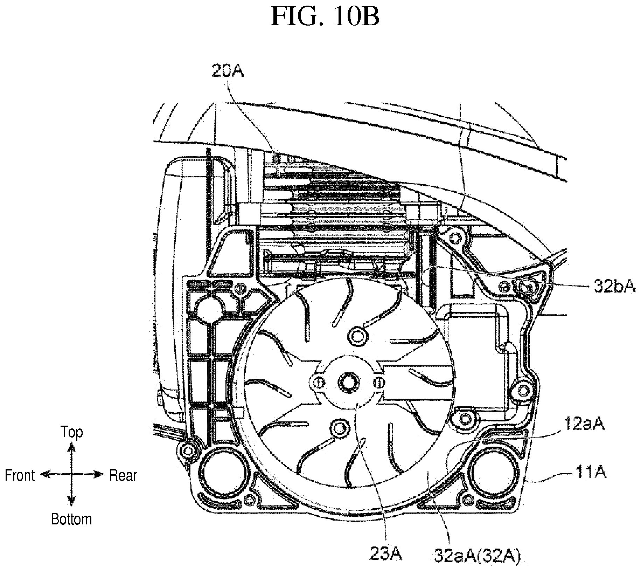

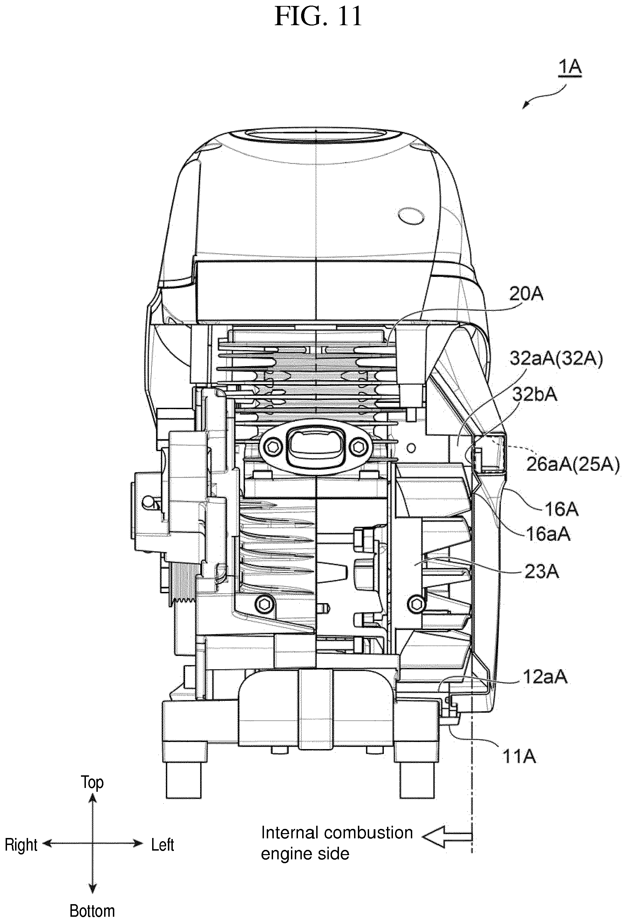

For example, when the present invention is applied to an engine cutter 1A including a disc-like cutter 8A as shown in FIG. 9, an internal combustion engine 20A (see FIGS. 10B and 11) for rotating driving the cutter 8A, and on the like, it is acceptable as long as, as clearly understood from FIGS. 10A to 11, an air intake port 26aA of an air intake passage 25A, which is configured such that part of air, which has flowed through a straightening passage 32aA of a volute 32A formed around a cooling fan 23A attached to a concave portion 12aA of a main body housing 11A and has been released from a discharge port 32bA, is sucked into an air intake system of the internal combustion engine 20A, is arranged substantially above the center of the cooling fan 23A so as to be adjacent to the cooling fan 23A (more particularly, an inlet port 16aA of a fan cover 16A that covers the cooling fan 23A) and on the outer side of the straightening passage 32aA (the opposite side of the internal combustion engine 20A). Note that in the shown example, the air intake port 26aA of the air intake passage 25A opens backward and is arranged at a predetermined distance toward the downstream side from the discharge port 32bA of the straightening passage 32aA. Accordingly, the air intake port 26aA of the air intake passage 25A is positioned near the cooling fan 23A than an extension line (from the discharge port 32bA) of the straightening passage 32aA formed around the cooling fan 23A as viewed from side (see, particular, FIG. 10A). Air taken from the air intake port 26aA may be sucked into the cylinder of the internal combustion engine 20A via a carburetor chamber having an air cleaner chamber (not shown) or the like.

### DESCRIPTION OF SYMBOLS

- 1: Chain saw (power working machine)
- 10: Chain saw main body
- 11: Main body housing
- 12: Main body case
- 12a: Concave portion
- 13: Carburetor case
- 14: Protruding portion
- 14a: Exhaust port
- 14b: Communication passage
- 15: Cylinder cover
- 15a: Front partition wall
- 15b: Inlet port
- 15c: Circumferential wall
- 15d: Lower partition wall
- 15e: Air intake port
- 15f: Opening
- 15g: First straightening guide
- 15h: Second straightening guide
- 16: Fan cover
- 16a: Inlet port
- 16b: Bulging portion
- 20: Internal combustion engine
- 21: Oil tank
- 22: Air cleaner
- 23: cooling fan
- 23a: Impeller
- 24: Fuel tank
- 25: Air intake passage
- 26: First passage of air intake passage
- 26a: First inlet port of first passage (air intake port of air intake passage)
- 26b: First outlet port of first passage
- 26c: First passage member
- 27: Second passage of air intake passage
- 27a: Second inlet port of second passage
- 27b: Second outlet port of second passage
- 27c: Second passage member
- 29: Circulating passage
- 30: Carburetor chamber
- 31: Air cleaner chamber
- 31a: Swirling flow path
- 32: Volute
- 32a: Straightening passage
- 32b: Discharge port of straightening passage

## Claims

1. A power working machine (1) comprising:
an air-cooled internal combustion engine (20) mounted in a main body housing (11);
a cooling fan (23) disposed to be driven by the internal combustion engine on one side of the main body housing;
a straightening passage (32a) formed around the cooling fan to straighten a flow of air sucked into the main body housing by the cooling fan; and
an air intake passage (25) adapted to suck part of air that has flowed through the straightening passage and has been released from a discharge port (32b) positioned at a downstream end of the straightening passage into an air intake system of the internal combustion engine,
wherein an air intake port (26a) of the air intake passage (25) is arranged on an opposite side of the internal combustion engine with respect to the straightening passage, and
of the air released from the discharge port of the straightening passage, at least part of air released toward the opposite side of the internal combustion engine with respect to the straightening passage is taken into the air intake passage via the air intake port, **characterised in that** the air intake port is provided so as to be inclined to the discharge port of the straightening passage as viewed from side.

2. The power working machine according to claim 1,
wherein the air intake port is provided on a lateral side of the internal combustion engine.

3. The power working machine according to claim 1,
wherein the air intake port is provided adjacent to the cooling fan as viewed from side.

4. The power working machine according to claim 1,
wherein the discharge port of the straightening passage opens in a diagonally forward direction, and the air intake port of the air intake passage opens downward above the cooling fan and communicates with an air cleaner chamber (31) disposed above and behind the cooling fan.

5. The power working machine according to claim 4,
wherein the air cleaner chamber stores a cylindrical air cleaner (22) and has a swirling flow path (31a) defined around the air cleaner,
air that has flowed through the air intake passage is introduced into the swirling flow path via an inlet port (15b) that opens into the swirling flow path on a lateral side of the air cleaner,
part of the air swirling in the swirling flow path is again sucked into and circulated through the cooling fan via an exhaust port (14a)
that opens into the swirling flow path in a direction different from the inlet port on the lateral side of the air cleaner, and
other part of the air swirling in the swirling flow path is sucked into the internal combustion engine via the air cleaner and a carburetor.

6. The power working machine according to claim 5,
wherein the exhaust port is arranged on a lower side than the inlet port.

7. The power working machine according to claim 5,
wherein the exhaust port is provided adjacent to a lower partition wall (15d) that forms the air cleaner chamber.

8. The power working machine according to claim 5,
wherein part of the air that has swirled in the swirling flow path is sucked into the cooling fan via an opening (14a) provided in the lower partition wall that forms the air cleaner chamber from the exhaust port.

9. The power working machine according to claim 8,
wherein the exhaust port is provided in a protruding portion (14) that protrudes upward from the lower partition wall, and
a communication passage (14b) for allowing the exhaust port and the opening to communicate with each other is provided inside the protruding portion.

10. The power working machine according to claim 5,
wherein the exhaust port is provided so as to be opposite a flow direction of air that has swirled in the swirling flow path.

11. The power working machine according to claim 5,
wherein the inlet port and the exhaust port are provided at the same position with respect to the air cleaner.

12. The power working machine according to claim 5,
wherein the inlet port is provided in a lateral side partition wall that forms the air cleaner chamber.

13. The power working machine according to claim 5,
wherein an arc circumferential wall (15c) is provided around the air cleaner, and
the swirling flow path is defined between the air cleaner and the circumferential wall.

14. The power working machine according to claim 13,
wherein the circumferential wall is provided on a cover (15) for forming the air cleaner chamber.

## Patentansprüche

1. Kraftarbeitsmaschine (1), umfassend:
einen luftgekühlten Verbrennungsmotor (20), der in einem Hauptkörpergehäuse (11) eingebaut ist;
ein Kühlgebläse (23), das angeordnet ist, um von dem Verbrennungsmotor auf einer Seite des Hauptkörpergehäuses angetrieben zu werden;
einen Ausrichtungskanal (32a), der um das Kühlgebläse gebildet ist, um einen Luftstrom auszurichten, der von dem Kühlgebläse in das Hauptkörpergehäuse gesaugt wird; und
einen Luftansaugkanal (25), der zum Ansaugen eines Teils der Luft geeignet ist, die durch den Ausrichtungskanal geströmt ist und aus einer Austrittsöffnung (32b), die an einem Abströmende des Ausrichtungskanals positioniert ist, in ein Luftansaugsystem des Verbrennungsmotors freigesetzt wurde,
wobei eine Luftansaugöffnung (26a) des Luftansaugkanals (25) an einer in Bezug auf den Ausrichtungskanal entgegengesetzten Seite des Verbrennungsmotors angeordnet ist, und
von der aus der Austrittsöffnung des Ausrichtungskanals freigesetzten Luft wenigstens ein Teil der in Bezug auf den Ausrichtungskanal zu der entgegengesetzten Seite des Verbrennungsmotors hin freigesetzten Luft über die Luftansaugöffnung in den Luftansaugkanal angesaugt wird, **dadurch gekennzeichnet, dass**
die Luftansaugöffnung derart vorgesehen ist, dass sie von der Seite betrachtet zur Austrittsöffnung des Ausrichtungskanals geneigt ist.

2. Kraftarbeitsmaschine nach Anspruch 1,
wobei die Luftansaugöffnung auf einer seitlichen Seite des Verbrennungsmotors vorgesehen ist.

3. Kraftarbeitsmaschine nach Anspruch 1,
wobei die Luftansaugöffnung von der Seite betrachtet neben dem Kühlgebläse vorgesehen ist.

4. Kraftarbeitsmaschine nach Anspruch 1,
wobei die Austrittsöffnung des Ausrichtungskanals in einer diagonalen Vorwärtsrichtung mündet, und die Luftansaugöffnung des Luftansaugkanals oberhalb des Kühlgebläses nach unten mündet und mit einer Luftreinigungskammer (31) verbunden ist, die oberhalb und hinter dem Kühlgebläse angeordnet ist.

5. Kraftarbeitsmaschine nach Anspruch 4,
wobei die Luftreinigungskammer einen zylindrischen Luftreiniger (22) lagert und einen um den Luftreiniger definierten Wirbelströmungsweg (31a) aufweist,
Luft, die den Luftansaugkanal durchströmt hat, über eine Einlassöffnung (15b), die auf einer seitlichen Seite des Luftreinigers in den Wirbelströmungsweg mündet, in den Wirbelströmungsweg eingeführt wird,
Teil der in dem Wirbelströmungsweg verwirbelten Luft in einer von der Einlassöffnung auf der seitlichen Seite des Luftreinigers verschiedenen Richtung erneut über eine Auslassöffnung (14a), die in den Wirbelströmungsweg mündet, in beziehungsweise durch das Kühlgebläse eingesaugt und umgewälzt wird, und
ein anderer Teil der in dem Wirbelströmungsweg verwirbelten Luft über den Luftreiniger und einen Vergaser in den Verbrennungsmotor eingesaugt wird.

6. Kraftarbeitsmaschine nach Anspruch 5,
wobei die Auslassöffnung an einer tiefer liegenden Seite als die Einlassöffnung angeordnet ist.

7. Kraftarbeitsmaschine nach Anspruch 5,
wobei die Auslassöffnung neben einer unteren Trennwand (15d), welche die Luftreinigungskammer bildet, vorgesehen ist.

8. Kraftarbeitsmaschine nach Anspruch 5,
wobei ein Teil der Luft, der in dem Wirbelströmungsweg verwirbelt wurde, über eine Öffnung (14a), die in der unteren Trennwand vorgesehen ist, welche die Luftreinigungskammer bildet, in das Kühlgebläse gesaugt wird.

9. Kraftarbeitsmaschine nach Anspruch 8,
wobei die Auslassöffnung in einem überstehenden Teil (14) vorgesehen ist, der von der unteren Trennwand nach oben übersteht, und
ein Verbindungsdurchgang (14b) zum Ermöglichen des Verbindens der Auslassöffnung und der Öffnung miteinander innerhalb des überstehenden Teils vorgesehen ist.

10. Kraftarbeitsmaschine nach Anspruch 5,
wobei die Auslassöffnung so vorgesehen ist, dass sie einer Strömungsrichtung von Luft, die in dem Wirbelströmungsweg verwirbelt wurde, entgegengesetzt ist.

11. Kraftarbeitsmaschine nach Anspruch 5,
wobei die Einlassöffnung und die Auslassöffnung an der gleichen Position in Bezug auf den Luftreiniger vorgesehen sind.

12. Kraftarbeitsmaschine nach Anspruch 5,
wobei die Einlassöffnung in einer Trennwand der seitlichen Seite vorgesehen ist, die die Luftreinigungskammer bildet.

13. Kraftarbeitsmaschine nach Anspruch 5,
wobei eine bogenförmige Umfangswand (15c) um den Luftreiniger vorgesehen ist, und
der Wirbelströmungsweg zwischen dem Luftreiniger und der Umfangswand definiert ist.

14. Kraftarbeitsmaschine nach Anspruch 13,
wobei die Umfangswand an einer Abdeckung (15) zum Bilden der Luftreinigungskammer vorgesehen ist.

## Revendications

1. Machine de travail de puissance (1) comprenant :
un moteur à combustion interne (20) refroidi par air, monté dans une enveloppe (11) de corps principal ;
un ventilateur de refroidissement (23) disposé, afin d'être entraîné par le moteur à combustion interne, d'un côté de l'enveloppe de corps principal ;
un passage redresseur (32a) formé autour du ventilateur de refroidissement, afin de redresser un écoulement d'air aspiré vers l'enveloppe de corps principal par le ventilateur de refroidissement ; et
un passage d'admission d'air (25) adapté à aspirer une partie de l'air ayant coulé à travers le passage redresseur, et ayant été dégagé à partir d'un orifice d'évacuation (32b) positionné au niveau d'une extrémité aval du passage redresseur, vers un système d'admission d'air du moteur à combustion interne,
un orifice d'admission d'air (26a) du passage d'admission d'air (25) étant agencé à un côté opposé du moteur à combustion interne par rapport au passage redresseur, et
dans l'air dégagé à partir de l'orifice d'évacuation du passage redresseur, au moins une partie d'air dégagée vers le côté opposé du moteur à combustion interne, par rapport au passage redresseur, étant reprise dans le passage d'admission d'air par l'intermédiaire de l'orifice d'admission d'air, **caractérisé en ce que**
l'orifice d'admission d'air est situé de manière à être incliné vers l'orifice d'évacuation du passage redresseur, vu depuis le côté.

2. La machine de travail de puissance selon la revendication 1,
dans laquelle l'orifice d'admission d'air est situé d'un côté latéral du moteur à combustion interne.

3. La machine de travail de puissance selon la revendication 1,
dans laquelle l'orifice d'admission d'air est situé adjacent au ventilateur de refroidissement, vu depuis le côté.

4. La machine de travail de puissance selon la revendication 1,
dans laquelle l'orifice d'évacuation du passage redresseur s'ouvre dans une direction diagonalement vers l'avant, et l'orifice d'admission d'air du passage d'admission d'air s'ouvre vers le bas au-dessus du ventilateur de refroidissement et se met en communication avec une chambre (31) d'épurateur d'air disposée en-dessus et derrière le ventilateur de refroidissement.

5. La machine de travail de puissance selon la revendication 4,
dans laquelle la chambre d'épurateur d'air stocke un épurateur d'air cylindrique (22) et comporte un circuit d'écoulement à tourbillon (31a) défini autour de l'épurateur d'air,
l'air ayant coulé à travers le passage d'admission d'air est introduit dans le circuit d'écoulement à tourbillon par l'intermédiaire d'un orifice d'entrée (15b) s'ouvrant vers le circuit d'écoulement à tourbillon d'un côté latéral de l'épurateur d'air,
une partie de l'air tourbillonnant dans le circuit d'écoulement à tourbillon est aspirée à nouveau vers le ventilateur de refroidissement, et amenée à circuler à travers ce dernier, par l'intermédiaire d'un orifice d'échappement (14a) s'ouvrant vers le circuit d'écoulement à tourbillon dans une direction différente de l'orifice d'entrée du côté latéral de l'épurateur d'air, et
une autre partie de l'air tourbillonnant dans le circuit d'écoulement à tourbillon est aspirée dans le moteur à combustion interne par l'intermédiaire de l'épurateur d'air et d'un carburateur.

6. La machine de travail de puissance selon la revendication 5,
dans laquelle l'orifice d'échappement est agencé d'un côté plus bas que l'orifice d'entrée.

7. La machine de travail de puissance selon la revendication 5,
dans laquelle l'orifice d'échappement est situé adjacent à une paroi de séparation inférieure (15d) destinée à former la chambre d'épurateur d'air.

8. La machine de travail de puissance selon la revendication 5,
dans laquelle une partie de l'air ayant tourbillonné dans le circuit d'écoulement à tourbillon est aspirée dans le ventilateur de refroidissement par l'intermédiaire d'une ouverture (14a) située dans la paroi de séparation inférieure qui forme la chambre d'épurateur d'air, à partir de l'orifice d'échappement.

9. La machine de travail de puissance selon la revendication 8,
dans laquelle l'orifice d'échappement est prévu dans une partie saillante (14) faisant saillie vers le haut à partir de la paroi de séparation inférieure, et
un passage de communication (14b), permettant la communication entre l'orifice d'échappement et l'ouverture, est prévu à l'intérieur de la partie saillante.

10. La machine de travail de puissance selon la revendication 5,
dans laquelle l'orifice d'échappement est prévu de manière à s'opposer à une direction d'écoulement de l'air ayant tourbillonné dans le circuit d'écoulement à tourbillon.

11. La machine de travail de puissance selon la revendication 5,
dans laquelle l'orifice d'entrée et l'orifice d'échappement sont prévus au niveau de la même position par rapport à l'épurateur d'air.

12. La machine de travail de puissance selon la revendication 5,
dans laquelle l'orifice d'entrée est prévu dans une paroi de séparation latérale qui forme la chambre d'épurateur d'air.

13. La machine de travail de puissance selon la revendication 5,
dans laquelle une paroi circonférentielle arquée (15c) est prévue autour de l'épurateur d'air, et
le circuit d'écoulement à tourbillon est défini entre l'épurateur d'air et la paroi circonférentielle.

14. La machine de travail de puissance selon la revendication 13,
dans laquelle la paroi circonférentielle est prévue à un couvercle (15) afin de former la chambre d'épurateur d'air.
